# EUROPÄISCHE PATENTANMELDUNG

(11) **EP 2 264 110 A1**
(43) Veröffentlichungstag der Anmeldung: **22.12.2010**
(21) Anmeldenummer: 09007912.0
(22) Anmeldetag: 17.06.2009
(51) Int. Cl.: C09D 11/00

(54) **Reaktive Tinte zur farbgebenden Beschriftung von Oberflächen**

(71) Anmelder: Mondi Uncoated Fine & Kraft Paper GmbH, 1032 Wien (AT)
(72) Erfinder: Schalkhammer, Thomas, Dr., 3072 Kasten (AT); Palkovits, Roland, Dr., 2700 Wiener Neustadt (AT); Kornherr, Andreas, Dr., 1100 Wien (AT)
(74) Vertreter: Landgraf, Elvira

(57) **Zusammenfassung**

Die Erfindung betrifft ein reaktive stabilisierte Eisen(III)salzlösungs-basierte Tintenstrahldruckertinte und damit gefüllte Druckertanks oder Tintenrefillflaschen, wobei die Lösung einen pH Wert von bis zu 8 aufweist.

## Beschreibung

Die Erfindung betrifft eine neuartige chemisch-reaktive Inkjettinte zur farbgebenden Beschriftung von Oberflächen. Die Erfindung nutzt dabei ein reaktives Färbeverfahren, das für Tintenstrahl- (Inkjet)-Bedruckung verwendet werden kann, und aus zumindest zwei nicht gemischten Komponenten besteht - einer phenolischen auf oder im zu beschriftenden Material und einer Eisensalz-basierten im Drucker bzw. dessen Vorratstank, die zum Zwecke der Beschriftung mittels Inkjet auf das zu beschriftende Material aufgebracht wird und unter Farbvertiefung reagiert.

### Stand der Technik

Bekannt sind reaktive Tinten (GB1469437, 1977-04-06, OZALID CO LTD; LANDAU R von Ink OZALID CO Ltd), die, wenn sie auf einen alkalische Oberfläche gebracht werden, aus einer Vorstufe einen farbigen Ausdruck liefern. Eine wässrige Lösung enthält ein Eisen- oder Titanchelat, einen Polyhydroxyverbindung (Tannin, Pyrocatechol, Pyrogallol, Gallussäure oder wasserlösliche Derivate), Ascorbinsäure und das Natriumsalz der Chromotropsäure. Eine typische Tinte enthält Wasser, Eisenammoniumoxalat, Eisen-EDTA, Titankaliumoxalat, Oxalsäure, Zitronensäure, Tannin, das Natriumsalz der Chromotropsäure, Pyrogallol, Ascorbinsäure, Pyrocatechol, Ethylenglycol und Sorbitol.

Bekannt sind unsichtbare Tinten (GB1292831, 1972-10-11, MEREDITH CORP (US) und FR2028486 (A1) und DE1946393 (A1)) mit einer phenolischen oder enolischen Gruppe die mit einem oxidierenden Metallion reagiert um damit eine Farbbildung zu erreichen. Dazu gemischt werden ein Bindemittel und ein Träger Lösungsmittel). Die reaktive Komponente ist z.B. Gallusäure, Propylgallat, Acetoacetat, Phenol, Resorcin, Kresol, Vanillin, Guajakol oder Zinkresorzinat. Als Entwickler dienen Eisensalze, oxidierende Metallsalze, Zitronensäure oder Bleiionen und Kongorot oder Yylenolorange. Als Bindemittel dienen Polyvinylpyrrolidon, Cellulosehydroxypropoxyether oder Polyamid. Träger sind Glycole, Glycolether, Ester and Etheralkohole. Optional Zusatzstoffe sind Fluorophore z.B. Methylumbelliferon, Zitronensäure, Füllstoffe z.B. Silica oder Silikate, Antioxidantien und UV-Stabilisatoren z.B. 2,4-Dihydroxybenzophenon. Bekannt sind auch andere unsichtbare Tinten z.B. (GB1350930, 1974-04-24, DICK CO AB auch NL7103180 (A), FR2084649 (A5), DE2112380 (A1) von A B DICK CO) die neben Gallussäure z.B. Leukofarbstoffe enthalten. Bekannt sind wärmesensitive Tinten (JP2265978, 1990-10-30, MATSUSHITA TOSHIHIKO; MORISHITA SADAO, MITSUBISHI PAPER MILLS LTD) unter Verwendung einer arom. Isocyanat-Komponente, einer Imino- Komponente, einem org. Lösungsmittel und Gallotannin bzw. Methyl-gallate, Ethylgallate, Trimethoxygallate oder Galliussäure-3-methylether.

Bekannt sind Aufzeichnungstinten (JP58183769, 1983-10-27, AKUTSU HIDEKAZU; FUJII TADASHI; MURAKAMI KAKUJI; ARIGA TAMOTSU; KAZAMI TAKEO von RICOH KK) aus einem N-Alkanolaminsalz der m-Digallussäure um die Wasserfestigkeit eines gefärbten Materiales zu erhöhen ohne die Löslichkeit des Farbstoffs zu verändern.

Bekannt sind Tinten die phenolische Komponenten (bevorzugt Gallussäure und Pyrogallol) enthalten (JP57207659, 1982-12-20, OOWATARI AKIO, von EPSON CORP) um dem Druck eine rasche Trocknung zu ermöglichen und den Drucker-Nozzle nicht zu verstopfen und frei von gelöstem Sauerstoff mit einem pH-Wert von 12-14.

Bekannt ist weiters eine Farbtinte (JP9059547, 1997-03-04, KAWASHIMA SEIJI) die eine farblose Tinte verwendet aus z.B. Zinkchlorid, Salizylsäure, Tannin u.ä. mit einem Farbmittel als elektronengebenden Komponente und die Farbe durch Zugabe von Wasser entfärbt wird. Bekannt sind Inkjettinten aus dem Tannin der Kaki (KR20040012361, 2004-02-11, SON GYU, YOUNGDONG AGRICLTUVAL) als Ersatz für übliches Tannin, mit reduzierten Produktionskosten und einer sicheren Versorgungslage. Die Tinte enthält verschiedene Komponenten u.a. Wasser, organische Lösungsmittel, Farbstoffe, Tannin, Extrakt der Kaki enthaltend Gallussäure, Ellagsäure und Catechin.

Bekannt ist eine Inkjet-Tinte die das Verstopfen der Düsen verhindern soll (JP2005272762, 2005-10-06, KONO MONICHIRO; IIDA YASUHARU von TOYO INK MFG CO).

Die Tinte enthält 0.3-10 wt.% Lebensmittelfarbe, , 45-98.7 wt.% Ethanol, 0.5-5 wt.% Tannin, , 0-30 wt.% Propylenglycol, 0.5-5 wt.% Natriumlaktat und 0-5 wt.% Wasser.

Bekannt ist ein Aufzeichnungsmaterial für Tinten (JP1241487,1989-09-26, HAYAMA KAZUHIDE; YAMASHITA AKIRA von MITSUBISHI PETROCHEMICAL CO) welches 0.1 bis 30 % einer Komponente mit einer phenolischen OH-Gruppe enthält, sowie ein Bindemittel von 5-95wt.% Polyvinylalkohol und 95-5wt.% eines kationischen wasserlöslichen Harzes.

Die phenolische Komponente weist zumindest zwei Hydroxylgruppen auf besteht aus Hydrochinon, Tannin, Resorzin, Di-t-butylphenol, Phloroglucinol oder Bis(4-hydroxyphenol)methan.

Bekannt ist ein farbreaktives Schreibmaschinenpapier (GB856188, 1960-12-14, NEALE DAVID JOHN von CARIBONUM LTD) unter Verwendung eines farblose "Farbbandes" und eines imprägnierten Papiers primär mit Molybdaten und Wolframaten .

Bekannt ist ein Inkjetpapier (JP57087987, 1982-06-01, MURAKAMI MUTSUAKI; SEKIGUCHI YUMIKO von MATSUSHITA ELECTRIC IND CO LTD) mit verbesserter Lichtstabilität auf holzfreiem Papier durch metallische Oxide u.ä. z.B. Wolframphosphat, metallische Chloride (z.B..: Chromchlorid) und oder Tannin mit einem PVA-Binder und einem weißen Füller (z.B. Calciumcarbonat, etc.)

Bekannt ist ein Kopiersystem (GB191016515, 1911-06-08, CAMERON DUNCAN) unter Verwendung von feuchtem mit Tannin oder Gallussäure getränktem Papier zum Pausen von mit Eisengallustinte geschriebenen Texten. Als Zusätze dienen Natriumsulfit, Borax und Phenol.

Bekannt ist ein Kopierverfahren (GB943401, Feb. 11, 1959, IMAGIC PROCESS Ltd, auch NL267030 (A), NL248292 (A), GB991599 (A), BE595169 (A), DE1269630 (B1) unter Einsatz von Eisensulfat oder Chromaten als Entwickler und Polyphenol, Pyrogallussäure oder Tannin.

Bekannt ist ein thermisches Aufzeichnungsverfahren (JP4307289, 1992-10-29, MORITA YASUYOSHI; MURATA TATSUYA; KOYABU KYOKO von OJI PAPER CO) mit zweischichtigem Aufbau wobei eine Schicht ein Eisensalz einer Fettsäure und ein Gallussäurederivat enthält und die zweite Schicht einen Elektronendonator-Farbprecursor enthält.

Bekannt ist eine drucksensitive Aufzeichnungsschicht (JP1271284, 1989-10-30, TAJIRI MASANAO; SHINKOU KAZUYUKI; SHIOI SHUNSUKE von KANZAKI PAPER MFG CO LTD unter Verwendung von mikroverkapselten Reaktanden: 1.) Elektronen-übertragenden Farbformer 2.) Ligand mit phenolischen OH-Gruppen (z.B. Gallate, Salizylsäure,..) und 3.) Desensitizer mit 4.) einer Eisen(III)-Deckschicht.

Bekannt ist ein thermisches Aufzeichnungsverfahren (JP60083886, 1985-05-13, MATSUSHITA TOSHIHIKO; MORISHITA SADAO von MITSUBISHI PAPER MILLS LTD) mit einer Schicht aus Alkylgallaten mit einem Schmelzpunkt von 60-180 °C und einer Empfangsschicht aus Eisensalzen (Bevorzugt als Dispersion von Eisenstearat).

Bekannt ist ein analoges thermisches Aufzeichnungsverfahren (JP60083885, 1985-05-13, MATSUSHITA TOSHIHIKO; MORISHITA SADAO von MITSUBISHI PAPER MILLS LTD) oder JP60063192 (1985-04-11, MATSUSHITA TOSHIHIKO; MORISHITA SADAO von MITSUBISHI PAPER MILLS LTD)

Bekannt ist ein verbessertes Schreibpapier und die Tinte (GB189724560, 1897-12-11,COX FRED (DE); KORNACHER FRITZ (DE); BRUMM MARCUS (DE) wobei sich die Schrift erst durch den Kontakt mit dem Papier ausbildet und das Papier mit einer Lösung von Gallussäure oder Tannin getränkt ist und sodann mit einer reaktiven Tinte aus Eisensulfat beschrieben wird.

Bekannt ist ein Prozess zum Schreiben und Drucken (GB280088, 1927-11-10, UBALDO ALEJANDRO D INZEO) um ein Papier mit einer wässrigen oder alkoholischen Lösung von Gallussäure oder Tannin zu tränken und sodann mit einer reaktiven Tinte aus Eisennitrat oder einem Chromat in einem Lösungsmittel zu schreiben.

Bekannt ist ein Prozess zum Schreiben und Drucken (DE2505077, 1976-08-19, KRUEGER ELLEN der PELIKAN WERKE WAGNER GUENTHER) wobei eine Farbreaktionsschreib- und Druckflüssigkeit zum Erzeugen einer farbigen Schrift auf Grund der farbbildenden Reaktion zwischen Gallussäure und Schwermetallsalzen wie Eisen- und Vanadinsalzen, **dadurch gekennzeichnet, dass** in der Schreibflüssigkeit ein Gemisch von etwa 30 - 20 % Gallussäure und etwa 70 - 80 % Alkaligallat enthalten ist geoffenbart wird. Insbesondere wird die Mischung mit Alkalihydroxid oder Aminbase versetzt wobei etwa 30 - 20 % der Gallussäure in das Alkalisalz bzw. Aminsalz überführt werden. Die Erfindung offenbart die Herstellung farbloser Marken die erst nachträglich mit dem Metallsalz zur Reaktion gebracht werden und beschreibt die Herstellung dieser farblosen Marken durch Anwendungsbeispiele Als Trägermaterial kommen Papier, Pappe, Wellkartons, Pigmentpartikel, Folien, spritz- oder druck-gegossene Kunststoffteile, Metall, keramische Oberflächen, Lackschichten oder Korrosionsschutzschichten in Betracht.

Metallphenol-Komplexe sind in vielen Bereichen im Einsatz von Tinten, Druck-und Färbeverfahren bin hin zu Einsatz als Haarfärbemittel (z.B. JP61056119).

Eisengallustinte (oder kurz: Gallustinte) ist eine seit dem 3. Jahrhundert v. Chr.- gebräuchliche dokumentenechte schwarze Tinte, die sich gut mit Stahlfedern, allerdings schlecht mit Füllfederhaltern (Verstopfungsgefahr) schreiben lässt. Eisengallustinte (aus Eisensulfat, Galläpfelsud, Gummi arabicum u. a.) hat von allen Tinten die besten Fließeigenschaften, hält extrem lange an der Feder und ist sehr lichtecht. Sie kommt grau aufs Papier und nimmt ihre tiefschwarze Färbung erst nach einigen Stunden durch Oxidation an. Eisengallustinte ist nur für Stahlfedern geeignet, aufgrund ihres hohen Säuregehalts jedoch nicht für viele Füllfederhalter. Die Herstellung im Mittelalter erfolgte aus Eisen(II)-sulfat (Eisenvitriol), Galläpfeln, Wasser und Gummi arabicum. Die getrockneten Galläpfel werden zerstampft und zerkocht, wobei Gallsäure (Tannin) entsteht. Hinzu wird das Eisensulfat und das Gummi arabicum gegeben. Das Gummi Arabicum dient der besseren Schreibbarkeit und gegen Ausflockungen. Durch luftdichten Verschluss kann die Tinte zusätzlich konserviert und vor Ausflockungen geschützt werden.

Die fertige Tinte entsteht erst auf dem Papier durch Oxidation des zweiwertigen Eisens mit Luftsauerstoff zu dreiwertigem Eisen, welches mit der Gallussäure eine tiefschwarze Komplexverbindung eingeht. Dies dauert rund einen Tag. Damit die Tinte beim Schreiben besser sichtbar ist, wird noch ein Farbstoff wie Methylenblau hinzugegeben, der später verblasst. Dies wurde bei den Vertragstinten teilweise als Stilelement ausgenützt. Die Tinten schrieben schwarzblau und wurden nach dem Trocknen mehr oder weniger schwarz. Aber auch die Eisengallustinte selbst kann unter ungünstigen Bedingungen im Laufe der Jahre verblassen. Verblasste Eisengallus-Schriften können mit einer Lösung von Kaliumhexacyanoferrat(II) mit überschüssiger Salzsäure wieder sichtbar gemacht werden.

Diese Vertrags- (und teilweise auch Kanzleitinten) waren bis in die 1960er Jahre auch für Füllfederhalter üblich, zumindest im Geschäftsbereich. Da die Verwendung von Eisengallustinten in Füllfederhaltern wegen der auch dort erfolgenden Oxidation des Ausgangsstoffes des Farbstoffes die Gefahr des Verstopfens bestand, waren solche Tinten mit etwas Pflege der Füllfederhalter verbunden. Neben Eisengallustinten nach antiken Rezepten, welche nicht für Füllfederhalter tauglich sind, gibt es nur mehr sehr wenige Hersteller, die eine solche Tinte für Füllhalter herstellen: Der bekannteste ist der Füllfedernproduzent Montblanc, dessen eigene blauschwarze Tinte noch Eisengallustinte enthält. Die blauschwarze Tinte von z.B. Lamy ist eine eisengallushaltige Tinte. Zudem bietet auch noch das Unternehmen Diamine eine blauschwarze "Registrars Ink" an. Diese ist ebenfalls füllfedertauglich. Tinten in Tintenpatronen sind seltener Eisengallustinten, da hier das erforderliche regelmäßige Spülen etwas schwerer ist. Die blauschwarze Tinte sowohl von Montblanc als auch Lamy ist nur aus dem Glas eisengallushaltig. Eisentinten werden insbesondere in hochwertigen Anwendungen wie Urkunden bevorzugt. Wichtige Staatverträge müssen stets mit der beständigen Eisengallustinte geschrieben werden. Amtliche Vorschrift für Urkundentinten sind wie folgt: In einem Liter müssen mindestens 27 g Gerbsäure und Gallussäure sowie mindestens 4 g metallisches Eisen enthalten sein. Der Maximalgehalt an Eisen darf bei o. Mengen nicht mehr als 6 g/l betragen. Die Tinte soll nach 14 Tagen im Glas weder Blätterbildung, noch Wandbeschlag, noch Bodensatz zeigen. Acht Tage alte Schriftzüge müssen nach Waschen mit Wasser und Alkohol tiefdunkel bleiben.

### Aufgabe der Erfindung

Aufgabe der Erfindung war es, eine neue reaktive Tinte bereitzustellen, in dem die Farbe durch Reaktion zwischen dieser Tinte und einem reaktiven Papier ohne Verwendung von toner-pigmenthaltigen Druckmitteln entsteht.

Eine weitere Aufgabe der Erfindung war es ein Verfahren zur Herstellung einer derartigen Tinte bereitzustellen.

Eine weitere Aufgabe der Erfindung war es eine Vorrichtung bereitzustellen, mit der die erfindungsgemäße Tinte verarbeitet werden kann.

### Beschreibung der Erfindung

Gegenstand der Erfindung ist daher eine reaktive Tinte für ein Tintenstrahldruckverfahren zur Durchführung auf Substraten wie Papier, Pappe, Wellkartons, Folien, spritz- oder druck-gegossenen Kunststoffteile, Metall, keramischen Oberflächen, Lackschichten oder Korrosionsschutzschichten, die mit einem Polyphenol beschichtet sind, **dadurch gekennzeichnet, dass** die reaktive Tinte aus einer molekularen oder kolloidalen wässrigen Lösung von 1 bis 30 Gew% eines gelösten Eisen(III)- oder Eisen(II)salzes besteht und einen pH-Wert bis zu 8 aufweist.

Ferner soll die Partikelgröße der Teilchen in der Lösung wenigstens kleiner als 100 µm, bevorzugt kleiner 10 µm sein. Dies ist erforderlich, da es sonst leicht zu einer Beschädigung bzw. Verstopfung der Druckerköpfe kommt. Gegebenenfalls kann dies durch Filtration der Lösung sichergestellt werden.

Das zu bedruckende Objekt wird durch die chemische Reaktion der reaktiven Tintenstrahldruckertinte und einer Beschichtung räumlich definiert und strukturiert farblich verändert, wobei beliebige Zeichen, Buchstaben, Zeichenketten Muster, Linien Bilder, Symbole, Designs oder graphische Informationen durch eine Reaktion der beide Komponenten sichtbar werden. Die Erfindung beruht dabei darauf eine dokumentenechte Drucktinte bereitzustellen die durch Reaktion eines dreiwertigen Eisensalzes und einem Polyphenol Objekte und Materialien chemo-reaktiv beschreibbar macht. Die Generierung der farbigen Pigmentpartikel durch chemische Umwandlung erzeugt in-situ einen schwarz-grauen zumindest jedoch dunklen Farbton nach Reaktion einer schwach gefärbten Schicht der Precursorverbindungen und der eisenhaltigen Inkjettinte. Eisen(III)salze von weiß bis tiefbraun - abhängig von pH-Wert und damit das Zentralatom-umgebenden Liganden.

Im Gegensatz zu einem Laserdruck oder Tintenstrahldruck oder ähnlicher Druckverfahren entsteht hierbei die Farbe erst in-situ und wird auf und oder innerhalb der Oberfläche des zu beschriftenden Objekts gebildet. Dies ermöglicht hohe Farbechtheit, hohe Farbstabilität und Farbbildung "im Inneren des Objekts" geschützt von Umwelteinflüssen. Die Vorteile lassen sich wie folgt zusammenfassen:
- über Jahre stabile Farbe (kein Ausbleichen wie Thermopapiere)
- hoher Kontrast (im Gegensatz zu den meisten Thermopapieren)
- keine komplexen organisch-reaktiven Farbkomponenten mit hohem Allergiepotential
- nahezu reines Schwarz erzielbar (wie Russ-basierter Lasertoner)
- gut Maschinen-lesbar durch hohen Kontrast (Scannerkassen,...)
- Extreme thermische Stabilität (keine Veränderung bei heißem Klima,...)
- kombinierbar mit Barcode und Labeltechnik

Auch die Verwendung von täglich dem Licht ausgesetzten Produkten wie Druckwaren, Papier oder Folien im Außenbereich kann auf Grund der bleichechten Färbung als wichtiger Einsatzbereich des neuen Produktes gesehen werden. Hier sind alle üblichen Inkjettinten deutlich limitiert.

Die schwarze bis blau-schwarze Eisengallustinte, die wie ihr Name andeutet, im Wesentlichen aus Eisensalz und Galluassäure (Gerbsäure) besteht erhielt man früher z.B. durch Auflösen von 23,4g Tannin (Gerbsäure), 7,7g kristallisierter Gallussäure, 30g grüner Eisen-II-sulfatkristalle, 10g Gummiarabikum, 7g roher Salzsäure und 1 g Ascorbinsäure in 1 Liter Wasser.

Die erfindungsgemäße Tinte besteht bevorzugt aus einer 1 -30%igen, bevorzugt einer etwa 5%igen Lösung eines reaktiven dreiwertigen Eisensalzes. Das dreiwertige Eisen reagiert sofort (innerhalb von Sekunden) zu einem intensiv gefärbten Polyphenolkomplex mit den reaktiven Komponenten im Papier. Der Einsatz von Eisen(II)salzen (in üblichen Tinten eine aus pH-Wert- und Löslichkeitsgründen unvermeidbare Form des Eisens) hingegen benötigt einen sekundären Oxidationsschritt durch Luftsauerstoff und verzögert damit die Farbausbildung unter realen Druckbedingungen unnötig - jedoch kann ein gewissen Anteil von Eisen (II) - Verbindungen toleriert werden und bewirkt eine allenfalls gewünschte längerfristige schwache Intensivierung der Farbe durch Bereitstellung eines Eisenpools. Kurzfristig jedoch ist Eisen (II) weniger hilfreich, da der Druckvorgang nur wenige Sekunden feuchte Reaktionszeit bedingt und in dieser Zeit die Komplexbildung und Farbgenerierung ablaufen muss - in dieser kurzen Zeit muss Eisen (II) nahezu vollständig zu Eisen (III) oxidiert werden um eine gute Farbstärke zu ermöglichen.

Um die Verdruckbarkeit mit einem Tintenstrahldruck zu ermöglichen darf es in keinem Fall zu Ausfällungen oder Trübungen der Tinte kommen da diese den Druckkopf allenfalls sogar irreversible verstopfen. Eine Stabilisierung kann durch Komplexierung von 3-wertigem Eisen erreicht werden.

Es bieten sich Eisen(III)sulfat, Eisenalaune, Eisenammonium(III)sulfat, Eisengluconat und Eisenlaktat, allenfalls gebuffert im Bereich der Nichtausfällung von Eisen(III)salzen (primär Eisenhydroxiden oder FeO(OH)) an. Zu Eisenglukonat existiert eine Vielzahl von Analoga mit ähnlichen Eigenschaften - der Vorzug ist der moderate pH-Wert der den Druckkopf wenig belastet. Alternativ dazu sind z.B. Eisenammoniumsulfate stabile aber sehr saure (pH zumeist um 1-3) Alternativen. Hier muss auf den Aufbau des Druckkopfes geachtet werden.

Geeigenete Stabilisatoren für Eisen(III)-Komplexe sind beispielsweise Moleküle mit einer oder mehreren OH-Gruppen (z.B. Glycerin, Glycol, PEG, Zucker, Glykoside,..) oder Amide mit -CO-NR- oder -CO-NH- Strukturen (PVP + Copolymere, Polyamide, oligomere Amide, beliebige Amide, auch Proteine z.B. Gelantine,..) aber auch diverse Ionen. Starke Komplexbildner (Phosphat, Zitrat, Tartrat, EDTA,..) stören die Reaktion mit den Polyphenolen und verringern bzw. verhindern die Ausbildung des farbigen Komplexes.

Besonders geeignete Stabilisatoren sind Moleküle die Wasser in der Hydrathülle ersetzen können - ohne jedoch starke - die Farbbildung störende - Komplexe auszubilden. Insbesondere Sulfate (kosmotropes Ion) sind hier besonders geeignet. Andere kosmotrope Ionen wie Phosphate oder Citrate weisen zumeist zu hohe Bindungsaffinität zu Eisen auf und störten so die Farbbildung. Sulfate weisen darüber hinaus eine extrem gute Wassermischbarkeit von 754 g/l auf - so können wässrige Lösungen (eher Systeme) erzeugt werden die nahezu frei von "ungebundenem" Wasser sind. So steht auch kaum freies Wasser für die Hydrolyse der Eisen (III) Verbindungen zur Verfügung und das Tintesystem kann bei einem reaktiv hohen pH-Wert trübungsstabil in der Inkjetpatrone (bzw. im Tank) gehalten werden. Stark hydratisierte Anionen (z.B. Sulfat) haben dabei die gleiche Wirkung wie schwach hydratisierte Kationen (z.B. Ammonium) und werden als kosmotrop bezeichnet.

Da jedoch Sulfate selbst nur schwach pH-aktiv (Puffer-Wirkung) sind und so eine Mischung von 5% Eisen (III) sulfat unter Zusatz von 0 - 20% Ammoniumsulfat seinen pH von etwa 1.4 auf knapp über pH 2 ändert können auch noch sekundäre Ionen - mit erhöhter Pufferwirkung (z.B. Azeate) zugegeben werden. Hier kann der pH-Wert bis etwa pH=5 und höher angehoben werden ohne dabei kurzfristig die Fällung von unlöslichen Eisensalzen (Eisenhydroxiden o.ä.) zu bewirken. Es sind pH - Werte bis etwa 8 erreichbar.

Organisch-stabilisierende Verbindungen sind beispielsweise ein- oder mehrwertige Alkohole wie Butanol, Glycerin, Diglycerin, Triglycerin, Zucker, Zuckeralkohole, Zuckersäuren, oder Hydroxycarbonsäure.

Um die Viskosität, das Verdampfungs- und das Fließverhalten einzustellen werden zumeist organische Lösungsmittel (z.B. Dowanol, Glycerin, Glykol und dergleichen) und oder Polymere z.B. Gummi Arabicum zugegeben.

Als Drucksysteme werden erfindungsgemäß Tintenstrahldrucker (Matrixdrucker) eingesetzt die durch den gezielten Abschuss oder das Ablenken kleiner reaktiver Tröpfchen ein Druckbild durch chemische Reaktion mit der Oberflächenbeschichtung erzeugen.

Allen "On-Demand"-Druckern gemeinsam ist die Eigenschaft, dass die Tinte mit der Zeit eintrocknet bzw. die Düsen verstopft. Um dies zu verhindern, sind die Tinten nicht sehr schnelltrocknend - entsprechende Zusätze von zumeist höher-siedenden Lösungsmitteln bis etwa 30% sind zumeist notwendig. Die meisten Drucker fahren einen Reinigungszyklus. Eine weitere Möglichkeit besteht darin, den Druckkopf so zu parken, so dass wenig Luft an die Düsen gelangt. Je nach Druckermodell und Größen der Tintenpatronen kann die Patrone nach 40 bis 100 Reinigungen leer sein. Der Einsatz von Glycerin, Dowanol oder ähnlichen schwerflüchtigen - allenfalls wasseranziehenden Verbindungen verhindern das Verblocken der Düsen.

Kosmotrope Verbindungen wie Sulfate oder Azetate erhöhen die Oberflächenspannung des Lösungsmittels und verringern die Löslichkeit von nichtpolaren Substanzen ("aussalzen"); sie verstärken also hydrophobe Wechselwirkungen. Daher ist of die Zugabe von Detergenzien notwendig um ein ausreichendes Eindringen der Inkjettröpfchen durch Benetzung der Papieroberfläche zu gewährleisten. Alle mit Eisensalzen verträglichen Detergentien sind hier verwendbar. Der Einsatz muss jedoch an die Eigenschaften des Papiers angepasst werden, da eine starke Penetration im Papier auch horizontal erfolgt und so das Schriftbild verschwommen wirken kann.

Die toxische Wirkung von Eisen(III)verbindungen ist deutlich geringer als jene von gut komplexierten Eisen(II)verbindungen (z.B. in Eisentabletten) und zumeist gerade einmal 3 - 4 mal höher als jene von Kochsalz. Darüber hinaus fällt Eisen (III) bei neutralem pH-Wert rasch aus (jedem Anwender als Rost bekannt!!) und wird im Millionen-Tonnen-Maßstab in der Abwassertechnik zum Fällen von Verunreinigungen verwendet. Daher ist die Druckertinte überaus umweltverträglich und mit bestehenden Wasserbehandlungsprozessen voll kompatibel.

Die folgenden Beispiele beschreiben die technische Realisierung ohne diese zu beschränken:
Beispiel 1: Eisen (III) basierte Inkjet-Tinte
Eine typische Inkjettinte kann durch Lösen von
   - 5% Eisen(III)sulfat,
   - 5% Ammoniumsulfat,
   - 0 - 10% Ammoniumazetat (zur Einstellung des pH-Werts)
   - 10% Glyzerin
   - 0 - 5% Detergenz
   in Wasser hergestellt werden.

Der pH-Wert der Lösung bewegt sich von pH∼ 1.5 (ohne Zusatz von Ammoniumazetat) bis etwa pH = 5 und kann über den Gehalt an Ammoniumazetat variiert werden. Die Lagerstabilität der Lösung nimmt zu höheren pH-Werten hin leicht ab - die Verträglichkeit mit bestehenden Druckköpfen jedoch zu. Somit wird je nach eingesetzter Druckkopftechnologie der pH-Wert angepasst. Jedoch zeigen auch Druckköpfe großer Hersteller durchaus eine Langzeitverträglichkeit bei pH-Wert unter 2.0.

Eine Stabilisator gegen Trübung (zumeist ein Polymer) kann geringe Mengen an gebildeten unlöslichen Eisen (III) Niederschlägen kolloidal in Lösung halten. Nach vollständiger Lösung wird die Tinte filtriert und in die Druckköpfe verfüllt.

### Beispiel 2: Saure Eisen (III) basierte Inkjet-Tinte

Eine saure Inkjettinte kann durch Lösen von
- 5% Eisensulfat,
- 20% Ammoniumsulfat,
- 10% Glyzerin
- 0-5% Detergenz
in Wasser hergestellt werden.

Der pH-Wert der Lösung beträgt etwa 2.1. Die Lagerstabilität der Lösung ist exzellent und die Lösung Standard-Druckköpfen verträglich.

### Beispiel 3: Technische Eisen (III) basierte Inkjet-Tinte

Eine saure Inkjettinte kann durch Verdünnen einer etwa Ferral-Lösung (etwa 30% iges technisches Eisen(III)aluminium-sulfat-chlorid für die Abwassertechnik) im Verhältnis 1 +5 mit einer Lösung von
- 10% Ammoniumsulfat,
- 10% Glyzerin
- 0-5% Detergenz
in Wasser hergestellt werden.

Der pH-Wert der Lösung ist < 2. Technische Lösungen müssen von dem Verfüllen allenfalls filtriert werden um alle Partikel > 100 µm zu entfernen, da diese Druckköpfe beschädigen können.

## Patentansprüche

1. Reaktive Tintenstrahldruckertinte für ein Tintenstrahldruckverfahren zur Durchführung auf Substraten wie Papier, Pappe, Wellkartons, Folien, spritz- oder druck-gegossenen Kunststoffteile, Metall, keramischen Oberflächen, Lackschichten oder Korrosionsschutzschichten, die mit einem Polyphenol beschichtet sind, **dadurch gekennzeichnet, dass** die reaktive Tinte aus einer molekularen oder kolloidalen Lösung von 1 bis 30 Gew% eines gelösten Eisen(III)-salzes besteht und einen pH-Wert bis zu 8 aufweist.

2. Reaktive Tintenstrahldruckertinte nach Anspruch 1, **dadurch gekennzeichnet, dass** die Partikelgröße in der Lösung < 100 µm beträgt.

3. Reaktive Tintenstrahldruckertinte nach Anspruch 1 oder 2, **dadurch gekennzeichnet, dass** diese an oder in der Oberfläche von mit einem Polyphenolen beschichteten Substrat zur Reaktion gebracht einen stabilen für das menschliche Auge sofort erkennbarer dokumentenechter Farbkomplex bildet.

4. Reaktive Tintenstrahldruckertinte nach einem der Ansprüche 1 bis 3, **dadurch gekennzeichnet, dass** die Eisen(III)- oder Eisen(II)salzlösung schwach komplexierende Zusätze enthält, die das Eisensalz trübungsfrei in Lösung hält vorzugsweise Ammoniumsalze, Sulfate oder Sulfonsäuren, organische Säuren und deren Salze, Amide, lösliche Polyamide sowie Polyhydroxyverbindungen wie Zucker oder Polyole.

5. Reaktive Tintenstrahldruckertinte nach einem der Ansprüche 1 bis 4, **dadurch gekennzeichnet, dass** die Eisen(III)-salzlösung 1-10% Eisen(III)salz, 0-20% eines löslichen Sulfats, 0-10% Azetate zur Einstellung des pH-Werts, 0-30% eines organischen Lösungsmittels als Feuchthaltemittel, einer Polyhydroxyverbindung zur Viskositätseinstellung, und 0-5% Detergenz enthält.

6. Reaktive Tintenstrahldruckertinte nach einem der Ansprüche 1 bis 5, **dadurch gekennzeichnet, dass** diese 1-10% Eisen(III)sulfat oder Eisen(III)chlorid oder Eisenaluminiumsulfate bzw. Eisenaluminiumsulfatchlorid-Mischungen enthält.

7. Reaktive Tintenstrahldruckertinte nach einem der Ansprüche 1 bis 6, **dadurch gekennzeichnet, dass** diese Eisen(III)-salzlösung 1-10% Eisen(III)salz, 0-20% Alkali- oder Ammoniumsulfate und 0-10% Alkali-oder Ammoniumazetate zur Einstellung des pH-Werts enthält.

8. Reaktive Tintenstrahldruckertinte nach einem der Ansprüche 1 bis 7, **dadurch gekennzeichnet, dass** diese 5% Eisen(III)sulfat, 5% Ammonium-oder Alkalisulfat, 0-10% Ammonium- oder Alkaliazetat, bis zu 20% Glyzerin und 0-5% eines eisenverträglichen Detergenz enthält.

9. Reaktive Tintenstrahldruckertinte nach einem der Ansprüche 1 bis 8, **dadurch gekennzeichnet, dass** das Eisen(III)salz teilweise oder vollständig durch Eisen(II)salz ersetzt ist, und das Eisen(II)salz durch Zutritt von Luftsauerstoff oder durch Oxidationsmittel teilweise oder vollständig in das Eisen(III)salz umgewandelt wird.

10. Reaktive Tintenstrahldruckertinte nach einem der Ansprüche 1 bis 9, **dadurch gekennzeichnet, dass** die reaktive Tinte im Vorratsbehälter des Druckers, Druckertanks oder in Refillflaschen in Verkehr gebracht, gelagert und oder verwendet wird.

11. Druckertanks oder Tintenrefillflaschen, **dadurch gekennzeichnet, dass** diese mit einer reaktiven Tintenstrahldruckertinte nach einem der Ansprüche 1 bis 9 gefüllt sind.
